# EUROPEAN PATENT APPLICATION

(11) **EP 1 206 051 A1**
(43) Date of publication of application: **15.05.2002**
(21) Application number: 01945747.2
(22) Date of filing: 02.07.2001
(51) Int. Cl.: H04B 7/10, H04B 7/26

(54) **WIRELESS COMMUNICATION DEVICE, AND WIRELESS COMMUNICATION METHOD**

(30) Priority: 03.07.2000 JP 2000201233
(71) Applicant: MATSUSHITA ELECTRIC INDUSTRIAL CO., LTD., Kadoma-shi, Osaka 571-8501 (JP)
(72) Inventor: AIZAWA, Junichi, Yokohama-shi, Kanagawa 240-0033 (JP); AOYAMA, Takahisa, Yokosuka-shi, Kanagawa 239-0841 (JP); HOSHINO, Masayuki, Yokosuka-shi, Kanagawa 239-0841 (JP)
(74) Representative: Grünecker, Kinkeldey, Stockmair & Schwanhäusser Anwaltssozietät
(86) International application number: JP0105696
(87) International publication number: WO0203571

(57) **Abstract**

An array directivity switching determining section 114 stores reception quality information outputted from a separating section 113, determines whether to change a directivity or beam width of transmission array antenna based on reception quality information, and outputs an information to indicate either to change the directivity or beam width of transmission array antenna to an array directivity switching controlling section 115 in accordance with the determination result. When an information to change the directivity or beam width of transmission array antenna is output from the array directivity switching determining section 114, the array directivity switching controlling section 115 calculates the weight to be transmitted at each antenna based on arrival directivity information outputted from a reception array directivity controlling section 110, outputs the weight to the reception array directivity controlling section 110, and outputs an information to change the directivity or beam width of transmission array antenna.

## Description

### Technical Field

The present invention relates to a radio communication apparatus and a radio communication method, specifically to an array antenna control of a radio communication apparatus.

### Background Art

In radio communications, there is a case in which transmitted data might not be received correctly due to influence of a channel etc. In this case, when a transmitting side transmits data to a receiving side, the receiving side performs error detection on the received data, and transmits a retransmission request to the transmitting side when there is an error detected. Then, when receiving the retransmission request from the receiving side, the transmitting side transmits data using the same directivity or beam width of transmission array antenna used when data has been first transmitted.

Moreover, after the first data is correctly received, the transmitting side transmits next data using the same directivity or beam width of transmission array antenna used when first data has been transmitted.

However, since a channel situation changes every moment, it is not guaranteed that a method transmitting data is always the optimum one, and the optimum directivity or beam width of transmission array antenna differs depending on the channel situation, resulting in poor transmission efficiency in the radio communications that does not perform transmission using the optimum directivity or beam width of transmission array antenna in accordance with the channel situation.

### Disclosure of Invention

It is an object of the present invention to provide a radio communication apparatus and a radio communication method that can reduce the number of retransmissions to improve transmission efficiency.

This object can be achieved by measuring a channel situation at the time when a receiving side performs reception and detects an error, then deciding a directivity or beam width of transmission array antenna used when a transmitting side transmits/retransmits data based on the measured channel situation, transmitting side performs transmission with an appropriate directivity or beam width of transmission array antenna when carrying out transmission/retransmission.

### Brief Description of Drawings

FIG. 1 is a block diagram showing the configuration of the radio communication apparatus according to Embodiment 1 of the present invention; and
FIG. 2 is a block diagram showing the configuration of the radio communication apparatus according to Embodiment 2 of the present invention.

### Best Mode for Carrying Out the Invention

The following is an explanation of the embodiments of the present invention with reference to the drawings accompanying herewith.

### (Embodiment 1)

This embodiment explains the operations when using quality information of received signal measured according to the channel situation.

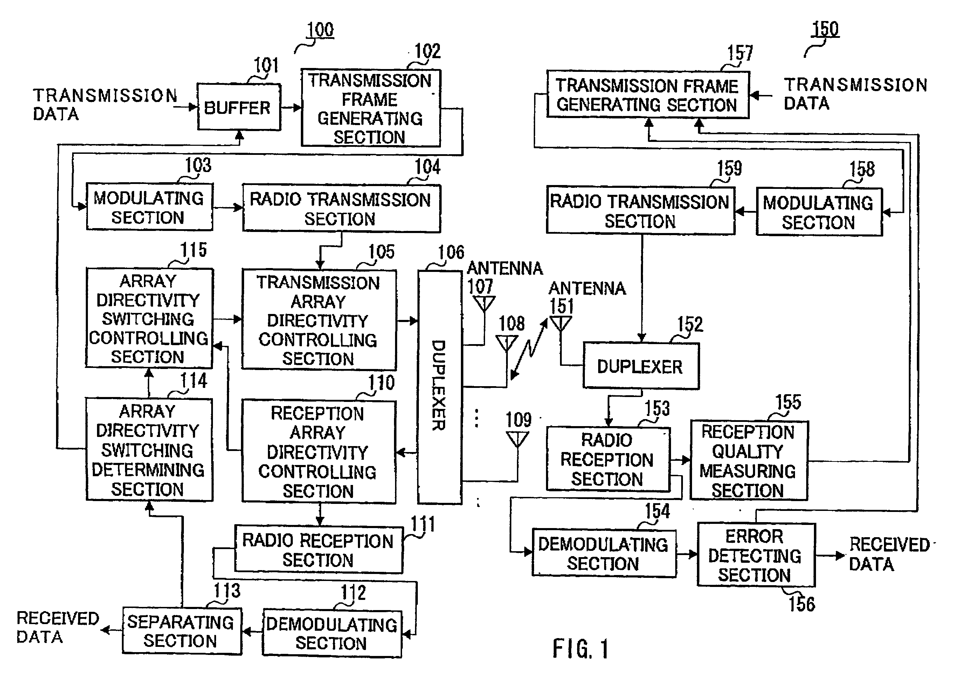

FIG. 1 is a block diagram showing the configuration of the radio communication apparatus according to Embodiment 1 of the present invention. In FIG. 1, a radio communication apparatus 100 and a radio communication apparatus 150 perform radio communication with each other.

A buffer 101 stores transmission data and outputs transmission data to a transmission frame generating section 102 according to an information outputted from an array directivity switching determining section 114 to be described later.

The transmission frame generating section 102 generates a transmission frame composed of transmission data outputted from the buffer 101, and outputs the generated frame to a modulating section 103.

The modulating section 103 modulates the transmission frame, and outputs the modulated frame to a radio transmission section 104.

The radio transmission section 104 performs radio processing to the transmission signal outputted from the modulating section 103, and outputs the radio processed transmission signal to a transmission array directivity controlling section 105.

The transmission array directivity controlling section 105 assigns weight to the transmission signal outputted from the radio transmission section 104 according to an information outputted from an array directivity switching controlling section 115, and outputs the resultant weighted signal to antenna 107, antenna 108, and antenna 109 via a duplexer 106. Moreover, the transmission array directivity controlling section 105 does not assign new weight to transmission signal as long as no changes of the directivity or beam width of transmission array antenna is performed.

The duplexer 106 transmits the transmission signal outputted from the transmission array directivity controlling section 105 using antenna 107, antenna 108 and antenna 109. on the other hand, the duplexer 106 outputs the radio signal that has been received by antenna 107, antenna 108 and antenna 109 to a reception array directivity controlling section 110 as a received signal.

Each of the antenna 107, antenna 108, and antenna 109 transmits the transmission signal outputted from the duplexer 106, and outputs the received radio signal to the duplexer 106.

The reception array directivity controlling section 110 estimates direction of arrival of a received wave based on phase differences and power differences between signals received by the antenna 107, antenna 108, and antenna 109, and outputs information which indicates the direction of arrival (hereinafter referred to as "arrival directivity information") to the array directivity switching controlling section 115. Moreover, the reception array directivity controlling section 110 outputs the received signal outputted from the duplexer 106 to a radio reception section 111.

The radio reception section 111 performs radio processing to the received signal outputted from the duplexer 152, and outputs the radio processed received signal to a demodulating section 112.

The demodulating section 112 demodulates the received signal outputted from the radio reception section 111, and outputs the demodulated signal to a separating section 113.

The separating section 113 separates the received signal outputted from the demodulating section 112 into received data, information that indicates quality of the received signal (hereinafter referred to as "reception quality information) and a signal that indicates requesting transmission of next data (hereinafter referred to as "ACK signal") or a signal that indicates requesting retransmission of data (hereinafter referred to as "NACK signal), and outputs received data to outside, and outputs ACK/NACK signal and reception quality information to the array directivity switching determining section 114.

When array directivity switching determining section 114 stores the reception quality information outputted from the separating section 113 and when a NACK signal is received, the array directivity switching determining section 114 determines whether to change the directivity or beam width of transmission array antenna based on reception quality information. Then, based on the determination result, the array directivity switching determining section 114 outputs information whether to change the directivity or beam width of transmission array antenna to the array directivity switching controlling section 115, and outputs information to retransmit data to the buffer 101.

On the other hand, when an ACK signal is received, the array directivity switching determining section 114 determines whether to change the directivity or beam width of transmission array antenna based on reception quality information. Then, based on the determination result, the array directivity switching determining section 114 outputs information whether to change the directivity or beam width of transmission array antenna to the array directivity switching controlling section 115, and the array directivity switching determining section 114 outputs information to transmit next data to the buffer 101.

When array directivity switching determining section 114 outputs information to change the directivity or beam width of transmission array antenna, the array directivity switching controlling section 115 calculates the weight to be transmitted at each antenna based on the arrival directivity information outputted from the reception array directivity controlling section 110, and outputs the weight to the transmission array directivity controlling section 105, and the array directivity switching controlling section 115 outputs information to change the directivity or beam width of transmission array antenna.

Furthermore, when no change in the directivity or beam width of transmission array antenna is to be executed, the array directivity switching controlling section 115 outputs information not to change the directivity of transmission or beam to the transmission array directivity controlling section 105.

Antenna 151 receives radio signals transmitted from the antenna 107, antenna 108 and antenna 109, and outputs them to a duplexer 152. In addition, antenna 151 transmits a transmission signal outputted from the duplexer 152 as a radio signal.

The duplexer 152 outputs the received signal outputted from antenna 151 to a radio reception section 153, and outputs a transmission signal outputted from a radio transmission section 159 to the antenna 151.

The radio reception section 153 performs radio processing to a received signal outputted from the duplexer 152, and outputs the radio processed received signal to both demodulating section 154 and reception quality measuring section 155.

The demodulating section 154 demodulates a received signal outputted from the radio reception section 153, and outputs the obtained reception frame to an error detecting section 156.

The reception quality measuring section 155 measures quality of the received signal outputted from the radio reception section 153, and outputs reception quality information which indicates the measured reception quality to a transmission frame generating section 157.

The error detecting section 156 determines whether there is an error in a reception frame outputted from the demodulating section 154, and when there is an error detected in the received data, error detecting section 156 outputs a NACK signal which requests retransmission of the erroneous data to the transmission frame generating section 157. Moreover, when there is no error detected in the received frame, the error detecting section 156 outputs an ACK signal which requests transmission of next data to the transmission frame generating section 157, and the error detecting section 156 outputs errorless data.

The transmission frame generating section 157 generates a transmission frame composed of transmission data, reception quality information, and ACK/NACK signal, and outputs generated frame to a modulating section 158.

The modulating section 158 modulates the transmission frame, and outputs the modulated frame to a radio transmission section 159 as a transmission signal.

The radio transmission section 159 performs radio processing to the transmission signal outputted from the modulating section 158, and outputs the radio processed transmission signal to the duplexer 152.

The following is an operational explanation of the radio communication apparatus of this embodiment.

Transmission data is stored in the buffer 101 and output to the transmission frame generating section 102 from the buffer 101 according to an information from the array directivity switching determining section 114, and the output data is formed as a transmission frame at the transmission frame generating section 102, and the resultant frame is output to the modulating section 103.

The transmission frame is modulated by the modulating section 103, the modulated frame is output to the radio transmission section 104 wherein it is subjected to radio processing operation, and is output as a radio signal to the transmission array directivity controlling section 105, then output to antenna 107, antenna 108, and antenna 109 via the duplexer 106.

A radio signal transmitted from the radio communication apparatus 100 is received by antenna 151 and is output to the radio reception section 153 as a received signal via duplexer 152.

The received signal is subjected to radio processing operation in the radio reception section 153, the radio processed signal is output to both the demodulating section 154 and reception quality measuring section 155, then demodulated by the demodulating section 154, and output as a reception frame to the error detecting section 156.

The reception quality of the received signal is measured by the reception quality measuring section 155, and reception quality information indicating the measured reception quality is output to the transmission frame generating section 157.

The error detecting section 156 determines whether there is an error in the received frame. When an error is detected, NACK signal of erroneous data is output to the transmission frame generating section 157, and when there is no error detected, ACK signal of errorless data is output to the transmission frame generating section 157, and the received data is output to the next stage (not shown in the figure).

The transmission frame generating section 157 generates a transmission frame composed of reception quality information, ACK/NACK signal and transmission data.

The transmission frame is modulated by the modulating section 158, then output to the radio transmission section 159 wherein it is subjected to radio processing operation, and the radio processed transmission signal is output as a radio transmission signal to antenna 151 via the duplexer 152.

The radio signal transmitted from the radio communication apparatus 150 is passed through antenna 107, antenna 108, antenna 109, duplexer 106, and reception array directivity controlling section 110, then output to the radio reception section 111 as a received signal wherein it is subjected to radio processing and is output to the demodulating section 112 whereby the radio processed signal is demodulated then the demodulated signal is output to the separating section 113. The reception array directivity controlling section 110 estimates direction of arrival of a received wave based on phase differences and power differences between signals received by antenna 107, antenna 108, and antenna 109, and the arrival directivity information is output to the array directivity switching controlling section 115.

The received signal is separated into received data, reception quality information and ACK/NACK signal by the separating section 113, the received data is output to the next stage (not shown in the figure), whereas reception quality information and ACK/NACK signal are output to the array directivity switching determining section 114.

According to reception quality information, which is stored in the array directivity switching determining section 114, the determination whether to change the directivity or beam width of transmission array antenna is performed. Then, based on the determination result, information whether to change the directivity or beam width of transmission array antenna is output to the array directivity switching controlling section 115.

Moreover, when NACK signal is input to the array directivity switching determining section 114, an information indicating a retransmission request is output to the buffer 101 from the array directivity switching determining section 114.

Furthermore, when ACK signal is input to the array directivity switching determining section 114, an information indicating a request for transmission of the next data is output to the buffer 101 from the array directivity switching determining section 114.

When a change in the directivity or beam width of transmission array antenna is performed, the array directivity switching controlling section 115 calculates the weight to be transmitted at each antenna based on the arrival directivity information outputted from the reception array directivity controlling section 110, and outputs the weight to transmission array directivity controlling section 105. Then, information to change the directivity or beam width of transmission array antenna is output to the transmission array directivity controlling section 105.

On the other hand, when no change in the directivity or beam width of transmission array antenna is performed, the array directivity switching controlling section 115 outputs an information to indicate no change in the directivity or beam width of transmission array antenna to the transmission array directivity controlling section 105.

Furthermore, when information indicates a retransmission request is input to the buffer 101, the transmission data to be retransmitted is output to the transmission frame generating section 102 from the buffer 101 and the output is generated as a transmission frame by the transmission frame generating section 102, and the generated frame is output to the modulating section 103. Then, the modulating section 103 modulates the resultant and outputs a modulated frame to the radio transmission section 104 wherein the modulated frame is subjected to radio processing operation. The radio processed frame is output as a radio signal with a phase or a power value that are controlled by the transmission array directivity controlling section 105 to the duplexer 106, antenna 107, antenna 108 and antenna 109 and then transmitted to the radio reception section 153 and received as a received signal by the antenna 151 and duplexer 152.

On the other hand, when an information request to transmit next data is input to the buffer 101, the successfully transmitted data is deleted from the buffer 101 and the next transmission data is input to the buffer 101, generated as a transmission frame by the transmission frame generating section 102, and then output to the modulating section 103 wherein the modulating section 103 modulates the resultant, and outputs it to the radio transmission section 104. The output is subjected to radio processing by the radio transmission section 104. The radio processed frame is output as a radio signal with a phase or a power value controlled by the transmission array directivity controlling section 105 to the duplexer 106, antenna 107, antenna 108 and antenna 109 and then transmitted to the radio reception section 153 and received by the antenna 151 and duplexer 152 as a received signal.

Therefore, according to the radio communication apparatus of this embodiment, since the directivity or beam width of transmission array antenna can be changed based on quality information of the received signal and transmission can be performed with an optimal directivity according to the channel situation, making it possible to reduce the number of retransmissions.

Additionally, when the quality of the stored reception quality information is low, the array directivity switching determining section 114 can inform the array directivity switching controlling section 115 to change the array directivity of transmission antenna to be oriented toward the main wave and the other waves.

In such a case where the quality of the stored reception quality information is low, transmission can be performed in a direction where transmission antenna can be oriented toward paths other than the main wave path, so that the receiving side can obtain diversity effect and the number of retransmissions can be reduced.

Moreover, when the quality of the stored reception quality information is low, the array directivity switching determining section 114 can output an information to widen the beam width of the directivity of transmission antenna used for transmission a signal to the array directivity controlling section 115.

Accordingly, since the quality of stored reception quality information is low and the beam width of the directivity of transmission antenna can be widened so as to perform transmission, it is possible to reduce the number of retransmissions and to lessen delay at the receiving side. Furthermore, even in a case where the channel situation is extremely poor, successful transmission can be achieved.

For example, when the quality of the stored reception quality information is high, the array directivity switching determining section 114 can output an information to narrow the beam width of the directivity of transmission antenna used for transmission a signal to the array directivity controlling section 115.

Therefore, since the quality of the stored reception quality information is high and the beam width of the directivity of transmission antenna can be narrowed so as to perform transmission, then it is possible to prevent interference to other users.

As another example, the array directivity switching determining section 114 can measure the level of stored reception quality information, making it possible to output an information to change the beam width corresponding to the level stepwise to the array directivity controlling section 115.

Therefore, since directivity or beam width of transmission array antenna can be changed gradually based on reception quality information, it is possible to perform transmission with an optimum directivity according to the channel situation and to reduce the number of retransmissions.

Still further example, the array directivity switching determining section 114 can provide limitations to the directivity or beam width of transmission array antenna.

Resulting in a limited range of the transmission signal and hence making it possible to prevent interference to other users.

### (Embodiment 2)

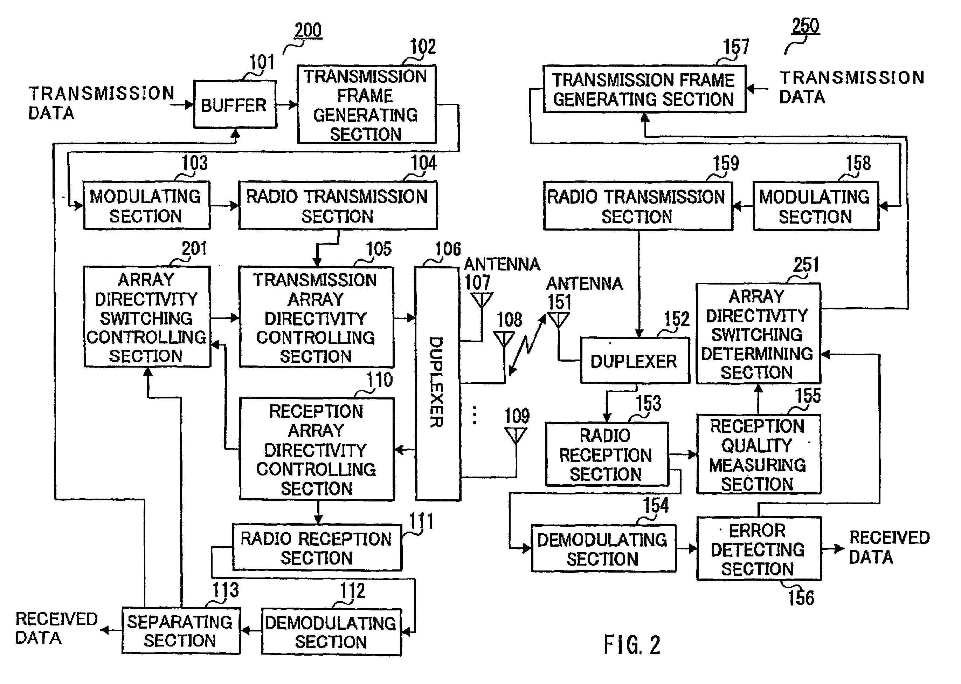

FIG. 2 is a block diagram showing the configuration of the radio communication apparatus according to Embodiment 2 of the present invention. Parts in FIG. 2 identical to those in FIG. 1 are assigned the same reference numerals as in FIG. 1 and their detailed explanations are omitted.

In FIG. 2, a radio communication apparatus 200 and a radio communication apparatus 250 perform radio communication with each other.

The buffer 101 stores transmission data, and outputs transmission data to the transmission frame generating section 102 according to an ACK/NACK signal outputted from the separating section 113.

The transmission array directivity controlling section 105 assigns weight to a transmission signal from the radio transmission section 104 according to an information outputted from an array directivity switching controlling section 201, and outputs the resultant signal to the antenna 107, antenna 108, and antenna 109 via the duplexer 106. Moreover, when the directivity or beam width of transmission array antenna is not changed, the transmission array directivity controlling section 105 does not change the weight of the transmission signal.

The reception array directivity controlling section 110 estimates direction of arrival of a received wave based on phase differences and power differences between signals received by the antenna 107, antenna 108, and antenna 109, and outputs arrival directivity information to the array directivity switching controlling section 201. Moreover, the reception array directivity controlling section 110 outputs a received signal outputted from the duplexer 106 to the radio reception section 111.

The separating section 113 separates a received signal output from the demodulating section 112 into a received data, a directivity switching signal to be described later and an ACK/NACK signal, specifically, outputs the received data to the next stage, outputs the ACK/NACK signal to the buffer 101, and outputs the directivity switching signal to the array directivity switching controlling section 201.

When an information to change the directivity or beam width of transmission array antenna is output according to an information indicative of a change in the directivity switching signal which is output from the separating section 113, the array directivity switching controlling section 201 calculates the weight to be transmitted at each antenna based on the arrival directivity information outputted from the reception array directivity controlling section 110. Then, weight is output to the transmission array directivity controlling section 105, and output the information to change the directivity or beam width of transmission array antenna.

Moreover, when the directivity or beam width of transmission array antenna is not changed, the array directivity switching controlling section 201 outputs information indicates no change of the directivity or beam width of transmission array antenna to the transmission array directivity controlling section 105.

The reception quality measuring section 155 measures quality of the received signal outputted from the radio reception section 153, and outputs the measured reception quality information to an array directivity switching determining section 251.

The error detecting section 156 determines whether there is an error in data of a reception frame output from the demodulating section 154, and outputs a NACK signal which requests retransmission of erroneous data to the array directivity switching determining section 251 when there is an error detected in the received data. Further, when there is no error in the received data, an ACK signal which requests transmission of next data is output to the array directivity switching determining section 251, so that only errorless data is output.

The transmission frame generating section 157 generates a transmission frame composed of transmission data, a directivity switching signal to be described later and ACK/NACK signal, and outputs the generated frame to a modulating section 158.

Array directivity switching determining section 251 stores the reception quality information output from the reception quality measuring section 155 and when NACK signal is received from the error detecting section 156, the array directivity determining section 251 determines whether to change the directivity or beam width of transmission array antenna based on the stored reception quality information. Then, information whether to change the directivity or beam width of transmission array antenna (hereinafter referred to as "directivity switching signal"), and NACK signal are both output to the transmission frame generating section 157.

Moreover, when receiving the ACK signal from error detecting section 156, the array directivity switching determining section 251 determines whether to change the directivity or beam width of transmission array antenna based on the stored reception quality information, and outputs, based on the determination result, the directivity switching signal and ACK signal to the transmission frame generating section 157.

Next, an operational explanation of the radio communication apparatus of this embodiment is given below.

The directivity switching signal is generated based on reception quality information by the array directivity switching determining section 251, and is composed together with the ACK/NACK signal and transmission data to generate transmission frame by the transmission frame generating section 157. The transmission frame is modulated by the modulating section 158 and then output to the radio transmission section 159 wherein it is subjected to radio processing operation, and then transmitted as a radio signal by antenna 151 via the duplexer 152.

A radio signal transmitted from the radio communication apparatus 250 is received by antenna 107, antenna 108, antenna 109, passed through duplexer 106 and reception array directivity controlling section 110 and output as a received signal to the radio reception section 111. The output to the radio reception section 111 is subjected to radio processing operation, output to the demodulating section 112 to be demodulated by the demodulating section 112, and then output to the separating section 113. Moreover, the reception array directivity controlling section 110 estimates direction of arrival of a received wave based on phase differences and power differences between signals received by the antenna 107, antenna 108, and antenna 109, and outputs arrival directivity information to the array directivity switching controlling section 201.

In separating section 113, the received signal is separated into received data, directivity switching signal, and ACK/NACK signal, received data is output to next stage, ACK/NACK signal is output to the buffer 101, and the directivity switching signal is output to the array directivity switching controlling section 201.

When the ACK signal is input to buffer 101, successfully transmitted data is deleted from the buffer 101 and next transmission data is input to buffer 101.

Moreover, when the NCAK signal is input to buffer 101, transmission data to be retransmitted is output from the buffer 101 to the transmission frame generating section 102, and the output is generated as a transmission frame by the transmission frame generating 102.

Based on the directivity switching signal, the array directivity switching controlling section 201 outputs an information to change the directivity or beam width of transmission array antenna to the transmission array directivity controlling section 105.

Therefore, relating to the radio communication apparatus of this embodiment, the directivity or beam width of transmission array antenna is changed according to the channel situation based on quality information of the received signal, so that transmission can be performed with an optimal directivity which makes it possible to reduce the number of retransmissions with a simple configuration of the radio communication apparatus on the transmitting side.

Additionally, although the radio communication apparatus of the present invention uses reception quality information to represent the channel situation, the present invention is not limited to this, and any information that represents the channel situation may be used.

Moreover, the radio communication apparatus of the present invention determines the change in the directivity or beam width of transmission array antenna every reception of ACK/NACK signal. However, it is possible to perform determination of the change in the directivity or beam width of transmission array antenna every predetermined number of times of receptions of ACK/NACK signal.

Still further, although the radio communication apparatus of the present invention uses reception quality information at the time of determining the change in the directivity or beam width of transmission array antenna the number of times that represent the predetermined reception quality information is stored, making it possible to determine the change in the directivity or beam width of transmission array antenna based on this reception quality information.

Still further, although the radio communication apparatus of the present invention changes the directivity or beam width of transmission array antenna in only one step, the present invention is not limited to this, and it is possible to perform the change in a plurality of steps. In such case, a plurality of threshold values is provided as an information of channel situation such as reception quality information etc, making it possible to change the directivity or beam width of transmission array antenna gradually every excess in the threshold value.

Still further, although the radio communication apparatus of the present invention utilizes the ACK signal and NACK signal, the present invention is not limited to this, and only ACK signal may be utilized. In this case, it is supposed that a request for retransmission of data is utilized until the ACK signal is transmitted, alternatively, it is possible to perform the same operation in the aforementioned explanation as in the case where the NACK signal is transmitted.

As it is obvious from the aforementioned explanation, according to the present invention, a channel situation is measured when a receiving side performs reception and detects an error, a directivity or beam width of transmission array antenna which is necessary when a transmitting side transmits/retransmits data is decided based on this channel situation so as to perform transmission with an appropriate directivity or beam width of transmission array antenna when transmission or retransmission, resulting in reducing the number of retransmissions and improving transmission efficiency.

This application is based on the Japanese Patent Application No. 2000-201233 filed on July 3, 2000, entire content of which is expressly incorporated by reference herein.

### Industrial Applicability

The present invention is suitable for use in a radio communication apparatus, a base station apparatus, or a communication terminal apparatus.

## Claims

1. A radio communication apparatus comprising:
directivity switching determining means for determining whether to change a directivity or beam width of transmission array antenna based on a channel situation obtained when a radio signal is received; and
antenna controlling means for controlling a transmission directivity to transmit/retransmit a signal according to a determination result of said directivity switching determining means.

2. The radio communication apparatus according to claim 1, wherein said directivity switching determining means orients a directivity of the transmission antenna toward waves other than a main wave when the channel situation is poor.

3. The radio communication apparatus according to claim 1, wherein said directivity switching determining means outputs an information to widen the beam width of the transmission antenna directivity when the channel situation is poor.

4. The radio communication apparatus according to claim 1, wherein said directivity switching determining means outputs an information to narrow the beam width of the transmission antenna directivity when the channel situation is good.

5. The radio communication apparatus according to claim 3, wherein said directivity switching determining means measures a level of the channel situation and changes the beam width gradually in accordance with said level.

6. The radio communication apparatus according to claim 3, wherein said directivity switching determining means provides a limitation on changing the directivity or beam width of transmission array antenna.

7. A radio communication apparatus comprising:
estimating means for estimating a channel situation obtained from a received radio signal and output reception quality information; and
directivity switching determining means for determining whether to change a directivity or beam width of transmission array antenna based on said reception quality information using a control signal that indicates a change in a transmission directivity.

8. A second radio communication apparatus that comprises antenna controlling means for controlling a transmission directivity to transmit/retransmit a signal in accordance with an information of a control signal transmitted from a first radio communication apparatus, wherein said first radio communication apparatus comprises estimating means for estimating a channel situation obtained when the signal is received and to output reception quality information, and directivity switching determining means for determining whether to change a directivity or beam width of transmission array antenna based on said reception quality information and to transmit a control signal that indicates a change in a transmission directivity.

9. The second radio communication apparatus according to claim 8, wherein said directivity switching determining means orients a directivity of the transmission antenna toward waves other than a main wave when the channel situation is poor.

10. The second radio communication apparatus according to claim 8, wherein said directivity switching determining means outputs an information to widen the beam width of the transmission antenna directivity when the channel situation is poor.

11. The second radio communication apparatus according to claim 8, wherein said directivity switching determining means outputs an information to narrow the beam width of the transmission antenna directivity when the channel situation is good.

12. The second radio communication apparatus according to claim 10, wherein said directivity switching determining means measures a level of the channel situation and changes the beam width gradually in accordance with said level.

13. The second radio communication apparatus according to claim 10, wherein said directivity switching determining means provides a limitation on changing the directivity or beam width of transmission array antenna.

14. Abase station apparatus comprising a radio communication apparatus wherein said radio communication apparatus comprising directivity switching determining means for determining whether to change a directivity or beam width of transmission array antenna based on a channel situation obtained when a partner radio communication apparatus on a receiver side receives a signal, and antenna controlling means for controlling a transmission directivity to transmit/ retransmit the signal in accordance with a determination result of said directivity switching determining means.

15. A communication terminal comprising a radio communication apparatus wherein said radio communication apparatus comprising directivity switching determining means for determining whether to change a directivity or beam width of transmission array antenna based on a channel situation obtained when a partner radio communication apparatus on a receiver side receives a signal, and antenna controlling means for controlling a transmission directivity to transmit/retransmit the signal in accordance with a determination result of said directivity switching determining means.

16. A base station apparatus comprising a radio communication apparatus wherein said radio communication apparatus comprising estimating means for estimating a channel situation obtained when the signal is received and output reception quality information, and directivity switching determining means for determining whether to change a directivity or beam width of transmission array antenna based on said reception quality information and to transmit a control signal that indicates a change in a transmission directivity.

17. A communication terminal apparatus comprising a radio communication apparatus wherein said radio communication apparatue comprises antenna controlling means for controlling a transmission directivity to transmit/ retransmit a signal in accordance with an information of a control signal transmitted from a partner radio communication apparatus on a receiver side.

18. A radio communication method comprising:
the directivity switching determining step of determining whether to change a directivity or beam width of transmission array antenna based on a channel situation of a signal that a communication partner has received; and
the antenna controlling step of controlling a transmission directivity in accordance with a determination result of said directivity switching determining step.

19. A radio communication method comprising:
at a receiver side, the estimating step of estimating a channel situation ;
the directivity switching determining step of determining whether to change a directivity or beam width of transmission array antenna based on said reception quality information that indicates a change in a transmission directivity, and
at a transmitter side, the antenna controlling step of controlling the directivity of transmission antenna or the beam width in accordance with the information to change the directivity or beam width transmitted from a radio communication apparatus on the receiver side.
